(19) Europäisches Patentamt / European Patent Office / Office européen des brevets

(11) **EP 3 594 191 B1**

(12) **FASCICULE DE BREVET EUROPEEN**

(45) Date de publication et mention
de la délivrance du brevet:
**17.03.2021 Bulletin 2021/11**

(21) Numéro de dépôt: **19184937.1**

(22) Date de dépôt: **08.07.2019**

(51) Int Cl.:
*C03C 3/12* *(2006.01)*      *C03C 3/14* *(2006.01)*
*C03C 3/15* *(2006.01)*      *C03C 3/23* *(2006.01)*
*C03C 8/04* *(2006.01)*      *C03C 8/24* *(2006.01)*

(54) **VERRES POUR CONNECTEUR HERMETIQUE**

GLASZUBEHÖR FÜR HERMETISCHEN STECKVERBINDER

GLASS PARTS FOR SEALED CONNECTOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.07.2018 FR 1856320**

(43) Date de publication de la demande:
**15.01.2020 Bulletin 2020/03**

(73) Titulaire: **AXON CABLE**
**51210 Montmirail (FR)**

(72) Inventeurs:
• **Yu, Ning**
**77174 VILLENEUVE LE COMTE (FR)**
• **De Deken, Leen**
**51210 MONTMIRAIL (FR)**

(74) Mandataire: **Cabinet Beau de Loménie**
**158, rue de l'Université**
**75340 Paris Cedex 07 (FR)**

(56) Documents cités:
WO-A1-2016/189225      JP-A- H01 138 150
JP-A- H07 330 372      US-A1- 2009 018 006

**Description**

La présente invention concerne des compositions de verres à base d'oxyde de tellure pour le scellement verre-métal et son utilisation dans des connecteurs hermétiques tels que des connecteurs micro-D hermétiques.

Dans l'intérêt de rendre plus compact l'interconnexion de systèmes électroniques, la densité de points de connexion devient de plus en plus une performance recherchée, ce qui a conduit à miniaturiser non seulement le câble de transmission, mais également le connecteur.

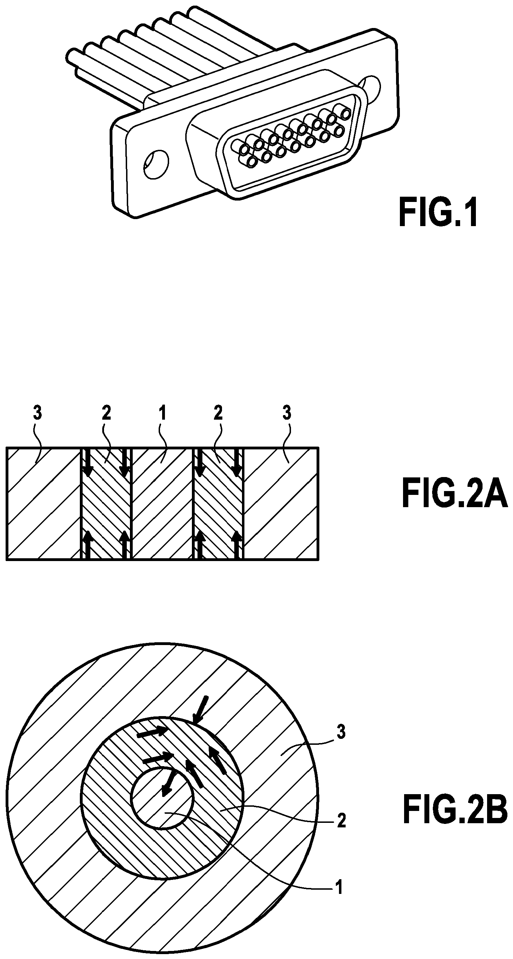

La norme Mil-DTL-83513 d'octobre 2008 définit une famille de connecteurs rectangulaires mâles et femelles, dont les parties en connexion ont une forme de D. Cette famille, appelée micro-D, est caractérisée par un pas de 1,27 mm, le pas représentant la distance entraxe entre 2 points de connexion adjacents quelconques. La norme définit aussi explicitement le nombre de point de connexion (ou le nombre de contacts) qui sont respectivement de 9, 15, 21, 25, 31, 37, 51 et 100. Ces contacts sont disposés dans le connecteur en 2 ou 3 rangées comme illustré dans la figure 1.

La série de connecteurs micro-D commence à apparaître massivement sur le marché de la connexion électronique ces dernières années.

Les caractéristiques définies par la norme MIL-DTL-83513 (connectique micro-D standard) que l'on recherche pour ce type de connecteurs sont donc:

- Résistance d'isolement entre les contacts et entre les contacts et le boitier > 5 Gohm à 500V DC ;
- Pas de défauts après 5 cycles de chocs thermiques -55 +125°C ;
- Résistance aux vibrations : pas de discontinuité > $1\mu s$ à 50G ;
- Résistance aux chocs mécaniques : pas de discontinuité > $1\mu s$ à 20G ;
- Rétention du contact > 2,26kg.

Certaines applications particulières demandent des propriétés spécifiques à ces connecteurs. Deux propriétés sont de plus en plus demandées : l'herméticité et l'amagnéticité.

L'herméticité, c'est à dire l'étanchéité aux gaz, est définie par un taux de fuite. Le taux de fuite acceptable doit être déterminé pour chaque application. Pour cela, il faut que la fuite n'ait pas d'influence sur la pression d'utilisation, les gaz ou le vide présents dans l'équipement.

Les connecteurs hermétiques sont souvent utilisés pour assurer des liaisons électriques dans des équipements sous vide. Dans ces dispositifs, la durée de vie des composants est souvent liée au maintien du vide car les appareillages sont souvent sensibles (spectromètre...). Ces connecteurs peuvent également séparer deux compartiments contenant des gaz différents qui ne doivent pas se mélanger ou ne doivent pas sortir du compartiment.

De par la sensibilité de plus en plus grande des appareillages, les taux de fuite maximum demandés pour ces connecteurs sont de plus en plus faibles. Pour pouvoir mesurer des taux de fuite très faibles, c'est-à-dire en dessous de $1.10^{-9}$ mbar.l/s, un détecteur de fuite à l'hélium est utilisé. L'hélium est le plus petit atome après l'hydrogène et existe sous forme de gaz inerte, à seulement 5ppm dans l'atmosphère.

La norme MIL-STD-883 d'avril 2016 est l'une des normes explicitant la méthode de mesure du taux de fuite pour les composants électroniques. Selon les conditions A4, la pièce est fixée de manière hermétique (utilisation d'un joint d'étanchéité et d'un serrage adapté) sur une chambre sous dépression. Il est avantageux d'avoir la pression la plus faible possible dans cette chambre pour avoir la meilleure sensibilité. En effet, plus la pression est faible, moins il y a de molécules de gaz dans la chambre et donc d'hélium résiduel, ce qui réduit le bruit de fond. La norme impose une pression inférieure à 0,13mbar (0,1torr). Cette chambre est reliée à un spectromètre de masse calibré pour atteindre le taux de fuite à l'hélium attendu. La calibration doit être faite à chaque période d'utilisation, grâce à une fuite calibrée de type diffusion. L'étanchéité du montage doit être vérifiée avec une plaque métallique plane. Ceci est réalisé en aspergeant la plaque d'hélium à l'aide d'un pistolet. Si le détecteur ne détecte pas d'hélium lors de cette vérification, le montage est correct et les pièces peuvent être testées de la même manière, en les aspergeant d'hélium.

Un bon niveau d'herméticité de connecteur (par exemple $1 \times 10^{-10}$ mbar·l/s) dépend principalement du scellement réalisé aux interfaces des composants métalliques conducteurs et de ceux en matériaux minéraux isolants.

L'amagnéticité représente la non-susceptibilité à être magnétisé sous un champ magnétique. Cette caractéristique est mesurée selon la procédure définie dans la norme GFSC-S-311 de février 1996, à l'aide d'un magnétomètre tridimensionnel. Premièrement, le champ magnétique initial est mesuré. Ensuite, la pièce est magnétisée avec un champ de 500mT à l'aide d'un aimant pendant 5min. Une nouvelle mesure de champ magnétique résiduel est effectuée. Enfin, une phase de démagnétisation est réalisée en appliquant un champ magnétique alternatif d'une valeur supérieure à 500mT. Une mesure est de nouveau réalisée.

Ainsi, les autres caractéristiques désirées pour les connecteurs, dues aux propriétés spécifiques que l'on veut apporter sont les suivantes:

- Taux de fuite à l'hélium inférieur à $1 \times 10^{-9}$ mbar.l/s, voire inférieur à $1 \times 10^{-10}$ mbar.l/s;

- Champ résiduel inférieur à 20nT;
- Température d'utilisation pouvant aller jusqu'à 200°C.

Par ailleurs, il est de plus en plus important que le connecteur soit conforme à la directive RoHS (Restriction of Hazardous Substances). Etant donné la perméabilité aux gaz des matières plastiques, du verre est souvent utilisé pour réaliser l'isolation entre les contacts et le boitier d'un connecteur hermétique. La liaison entre un ou plusieurs composants métalliques à l'aide d'une ou plusieurs parties en verre est appelée scellement verre-métal.

Le respect de la directive RoHS implique donc que le verre utilisé pour le scellement verre-métal des contacts dans le boitier du connecteur soit sans oxyde de plomb, ni aucun autre composé dont l'utilisation est restreinte par cette directive.

La grande majorité des connecteurs micro-D hermétiques sur le marché sont réalisés en combinant des alliages à faible coefficient de dilatation thermique, typiquement les alliages fer-nickel, fer-chrome ou fer-nickel-chrome, avec des verres borosilicates ou vitrocéramiques. Ces différents matériaux ont des coefficients de dilatation thermique (ou CTE pour « coefficient of thermal expansion » en anglais) très proches et assez faibles, de l'ordre de 5 à 10ppm/°C. Ceci permet aux matériaux de se dilater et de se rétreindre de la même manière lors de variations de température et d'éviter l'apparition de contraintes dans le verre. Ce type de scellement verre-métal est appelé scellement apparié.

Pour réaliser ces scellements verre-métal, les métaux sont souvent préalablement prétraités pour garantir une bonne liaison entre les matériaux. Il s'agit souvent d'une décarburation et d'une pré-oxydation. Ensuite, du verre, la plupart du temps sous forme de préformes, est maintenu en contact avec les métaux grâce à un outillage et l'ensemble est porté en température sous atmosphère contrôlée. La viscosité du verre ou de la vitrocéramique diminue et ce dernier se lie aux métaux.

La technique traditionnelle de connecteur hermétique consiste à réaliser un scellement entre Kovar®, une famille d'alliages à base de fer-nickel ou fer-chrome, et un verre borosilicate dans une plage de température 800°C-900°C. Cette solution présente l'inconvénient d'utiliser des matériaux très magnétiques mais aussi très peu conducteurs (matériaux ferreux : faible conductivité électronique). Ceci limite énormément le courant maximal pouvant circuler dans les contacts et engendre également des déformations dans les signaux. Ainsi, le courant maximal imposé par contact pour ces connecteurs est de 1A, alors que pour les connecteurs standards non hermétiques utilisant des contacts en alliages de cuivre, l'ampérage est limité à 3A. Cette technologie Kovar présente en outre d'autres nombreux inconvénients : médiocre tenue à la corrosion, forte sensibilité au magnétisme, haute température de scellement.

Des solutions hermétiques disponibles sur le marché permettent l'utilisation de contacts en alliage de cuivre bien plus conducteur. Les brevets WO9314613 et US6932644 décrivent ces connecteurs. Dans ces deux brevets, un contact en alliage de cuivre est scellé dans une partie en inox. Nous appellerons par la suite cette partie métallique dans laquelle les contacts sont scellés « insert ».

Pour avoir un boitier en aluminium (ou en titane ou encore d'un autre matériau métallique), ces deux brevets font appel à une plaque multimatière, réalisée grâce à une soudure par explosion ou par friction malaxage et qui sert de joint de transition entre les métaux. Cette plaque est composée au minimum de deux métaux, liés intimement. Les deux brevets diffèrent par l'emplacement de cette partie en multimatière. Le premier utilise cette plaque pour réaliser le boitier extérieur du connecteur. Une soudure laser inox-inox est utilisée pour lier l'inox de l'insert à l'inox du boitier, faisant partie de la multimatière. Le deuxième brevet dit gagner en poids et en fiabilité en utilisant cette plaque multimatière pour réaliser l'insert du boitier. Celle-ci est usinée pour que le scellement verre-métal se fasse uniquement dans l'inox et que l'aluminium présent en face arrière de l'insert se soude par laser avec le boitier extérieur, en aluminium également. Cette solution nécessite par contre de réaliser le scellement verre-métal des contacts à une température inférieure à la température de fusion de l'aluminium car il est présent dans le four lors de cette étape. Dans ces deux brevets, le scellement verre-métal est réalisé de préférence avec des vitrocéramiques (Kryoflex® et Ceramax®). Celles-ci présentent une concentration non négligeable d'oxyde de plomb (voir US4352951).

Ces deux solutions présentent l'avantage d'avoir une flexibilité au niveau du choix de la matière du boitier extérieur du connecteur : il suffit que la matière désirée puisse être liée à de l'inox par l'un des procédés cités. Mais ceci implique de nombreuses étapes de fabrication pour obtenir un connecteur : réalisation de la plaque multimatière, usinages, scellement verre-métal, soudure laser. Ceci a un impact non négligeable sur le prix final du connecteur. De plus, l'utilisation d'inox, même austénitique (304L, 316L...) implique un certain niveau de magnétisme résiduel (de l'ordre d'une centaine de nanoteslas). Un autre point dérangeant est l'utilisation d'une vitrocéramique à base d'oxyde de plomb non conforme à la directive RoHS.

Ainsi, pour éviter le magnétisme lié à l'utilisation d'inox, il semble avantageux de réaliser le scellement verre-métal directement dans un boitier en aluminium. En outre l'avantage d'utiliser l'aluminium et ses alliages pour l'herméticité est aussi dû à leur légèreté et à leur bonne dissipation thermique. En effet, ils peuvent être utilisés pour réaliser des boitiers contenant des composants électroniques produisant de la chaleur et la chaleur sera évacuée par le boitier. Cela évite l'utilisation de dissipateurs thermiques. De plus, certains alliages d'aluminium sont soudables au laser, ce qui est très intéressant pour réaliser les liaisons hermétiques avec une bonne fiabilité. Différents verres ou vitrocéramiques ont été développés pour le scellement verre-métal dans l'aluminium, souvent à base d'oxyde de plomb (US4202700, US5262364, US6037539). Peu de compositions semblent avoir conduit à des produits sur le marché, à part la composition ALSG-32. Cette composition a été développée par le Pr. Brow et a été commercialisée par de grands fournisseurs de verres (Ferro, Schott, Elan...). Des scellements verre-métal ont été réalisés avec le verre ALSG-32 à l'université de Californie à Davis et de bonnes tenues aux chocs thermiques, mécaniques et vibrations ont été observées.

Mais d'après le Pr. Brow lui-même, le design et la géométrie des pièces sont très importants pour garantir la réussite des scellements verre-métal. La difficulté consisterait à réaliser des scellements verre-métal rapprochés, c'est-à-dire avec peu d'aluminium entre deux préformes de verre/vitrocéramique. C'est le cas pour la micro-D car le pas n'est que de 1,27mm et qu'un contact de diamètre 0,40mm est souvent utilisé pour garantir une tenue mécanique suffisante. Une faible épaisseur d'aluminium signifie que les contraintes de compression sont exercées sur de petits volumes à chaque extrémité de ce métal. Ainsi, il y a plus de chances de dépasser la limite élastique en compression de l'aluminium dans ces zones, ce qui conduirait à une déformation plastique du métal. Ainsi, la compression sur le verre peut diminuer drastiquement et engendrer des défaillances dans le verre lors de montées en température. Ceci est d'autant plus vrai que la température de scellement du verre ALSG-32 est très élevée (550°C environ). L'aluminium perd donc beaucoup de ces caractéristiques mécaniques après un tel traitement thermique et sa limite élastique chute.

Il est à remarquer que dans le cadre du scellement verre-métal, toute cristallisation du verre, même partielle est à proscrire.

Des verres à base d'oxyde de tellure ont été décrits dans l'art antérieur pour le scellement verre-métal de boitiers de semi-conducteurs (US4945071, US4743302, US5013697, US5116786). Toutefois ces verres incluent de l'oxyde de plomb ce qui ne respecte pas la directive RoHS.

Seule la demande WO9310052 décrit un verre à base d'oxyde de tellure sans oxyde de plomb. Toutefois ce verre est un système binaire oxyde de tellure - oxyde de vanadium et ne suggère donc à aucun moment qu'il soit possible de supprimer l'oxyde de vanadium de sa composition. En outre de tels verres ne sont pas disponibles commercialement. Par ailleurs ce document suggère quand même l'addition d'oxyde de plomb et indique uniquement que ce type de verre peut être utilisé dans le scellement de semi-conducteurs à base de céramique. Il ne suggère donc à aucun moment qu'il puisse être utile dans le scellement verre-métal de l'aluminium ou d'alliages d'aluminium et encore moins dans le cas des connecteurs micro-D.

Il est donc toujours intéressant de trouver de nouvelles compositions de verre respectant la directive RoHS et pouvant être utilisées pour le scellement verre-métal de boitiers de connecteurs micro-D à base d'aluminium de façon à obtenir un connecteur hermétique et éventuellement amagnétique.

La demande de brevet FR3036396 publiée en 2016 décrit des connecteurs hermétiques du type MicroD en utilisant un scellement à une température comprise entre 350°C et 500°C entre des contacts en alliage cuivre-béryllium Cu-Be et un boîtier en acier inoxydable ou en aluminium, les verres utilisés étant du type $TeO_2$-$ZnO$-$TiO_2$-$K_2O$ ou $TeO_2$-$ZnO$-$TiO_2$ en l'absence totale de plomb.

Cette demande ne décrit ni ne suggère la possibilité d'utiliser d'autres oxydes en mélange avec le $TiO_2$ en dehors du $K_2O$. Or les inventeurs se sont aperçus de façon surprenante qu'il était possible d'améliorer la stabilité, la mouillabilité et/ou le coefficient de dilatation thermique CTE (Coefficient of Thermal Expansion) de ces verres en utilisant d'autres oxydes que le $K_2O$ en mélange avec le $TiO_2$.

Ces 3 caractéristiques impactent directement sur la qualité de scellement verre-métal tant au niveau du procédé de mise en œuvre qu'au niveau des produits obtenus.

En effet, la stabilité, exprimée par l'écart entre la température de transition vitreuse et celle de cristallisation, donne la marge de manœuvre à la mise en œuvre de verre d'une part et au scellement verre-métal d'autre part. Plus large est cet écart en température, plus tolérants ou plus robustes seront les procédés de mise en œuvre de verre et de scellement verre-métal.

La mouillabilité à l'état de fusion de verre mesure le niveau d'affinité entre le verre et le métal lorsque les deux se mettent en contact. Exprimée en angle de mouillage, plus cet angle est petit, plus le verre fondu a tendance à se lier au métal solide. Une mauvaise adhésion de verre sur métal ne pourrait pas donner naissance à une bonne herméticité de scellement.

Enfin, s'agissant les comportements thermiques des deux parties (verre et métal) non seulement lors de la mise en œuvre mais aussi dans l'exploitation de produit (connecteur), le CTE du verre conditionne directement la performance hermétique.

La demande de brevet US2009/018006 décrit des verres à base d'oxyde de tellure contenant du $B_2O_3$ et du $ZnO$ et pouvant éventuellement comprendre du $TiO_2$. Toutefois ces verres contiennent obligatoirement du $Bi_2O_3$ qui est indiqué comme essentiel pour leur stabilité et pour leur durabilité chimique. Il s'agit en fait de verres optiques dont les caractéristiques fonctionnelles n'ont rien à voir avec celles recherchées dans la cadre de la présente invention. En effet seules les propriétés de transmission et de réfraction sont décrites dans cette demande, les aspects physicochimiques du verre dans le scellement verre-métal tels que la viscosité, la mouillabilité et la dilatation thermique, n'étant pas du tout abordés.

La demande de brevet JP H01-138150 décrit également des verres à base d'oxyde de tellure pouvant contenir du $ZnO$ et éventuellement du $BaO$. Toutefois le $TiO_2$ n'est pas indiqué comme devant être obligatoirement présent et il est même absent des exemples. En outre ces verres contiennent obligatoirement du $Bi_2O_3$ qui est indiqué comme essentiel pour leur stabilité et pour leur durabilité chimique.

La demande de brevet JP H07-330372 décrit également des verres à base d'oxyde de tellure, de ZnO et de $B_2O_3$. Toutefois le $TiO_2$ n'est pas indiqué comme devant être obligatoirement présent et il est même absent des exemples. En outre ces verres contiennent obligatoirement du $Al_2O_3$ qui est indiqué comme essentiel.

Ainsi, les inventeurs se sont aperçus de façon surprenante qu'il était possible d'utiliser des verres à base d'oxyde de tellure, sans oxyde de plomb ni oxyde de vanadium, ni oxyde de potassium, ni oxyde de sodium, pour le scellement verre-métal de contacts dans un boitier, en particulier de connecteurs type micro-D, de façon à obtenir des connecteurs hermétiques, éventuellement amagnétiques et respectant la directive RoHS, tout en utilisant des contacts en cuivre ou alliage de cuivre.

La présente invention concerne donc une composition de verre à base d'oxyde de tellure pour le scellement verre-métal d'alliages ou de métaux ayant un coefficient de dilatation thermique supérieur à 16ppm/°C, ladite composition étant constituée par, en pourcentage molaire :

- de 50 à 80 % de $TeO_2$, avantageusement de 60 à 70 % ;
- de 8 à 40 % de ZnO, avantageusement de 15 à 35 % ;
- de 2 à 25% de $TiO_2$, avantageusement de 3 à 10 %
- de 1 à 20 % de $\alpha_xO_y$, avantageusement de 1 à 6 %, $\alpha$ étant un élément choisi dans le groupe constitué par Ba, Ce, Er, Sb, Y, La et B, x étant un nombre entier égal à 1 ou 2 et y un nombre entier égal à 1, 2 ou 3;
- éventuellement du $ZnF_2$ en une teneur de 2 à 10%, avantageusement de 3 à 8 %
- et les impuretés inévitables,

à la condition que $ZnF_2$ soit présent lorsque $\alpha_xO_y$ est BaO,
ladite composition étant essentiellement exempte, en particulier totalement exempte, d'oxyde de plomb, d'oxyde de sodium, d'oxyde de potassium et d'oxyde de vanadium.
Avantageusement, la composition est exempte de $Bi_2O_3$.
Plus avantageusement, la composition est exempte d'$Al_2O_3$, de F et/ou de $PbF_2$.
En général les impuretés inévitables peuvent être choisies parmi le plomb (Pb), le fer (Fe), le cuivre (Cu), l'arsenic (As), l'antimoine (Sb), le calcium (Ca), le carbonate ($CO_3$), le magnésium (Mg), le potassium (K), le sodium (Na), le phosphore (P), le chlorure (Cl), le silicium (Si), le soufre (S) et leurs mélanges. La teneur totale en impuretés inévitables est en générale inférieure ou égale à 0,1105% (1105 ppm).

Au sens de la présente invention, on entend par « scellement verre-métal » la liaison entre deux métaux ou alliages métalliques grâce au verre. Cette liaison implique dans le cas des connecteurs une liaison hermétique qui permet le passage d'une information électrique. L'isolation électrique est donc également sous-entendue.

Au sens de la présente invention, on entend par « température de scellement » la température à laquelle il faut chauffer le verre et les métaux pour obtenir le scellement, c'est à dire pour abaisser la viscosité du verre et créer une liaison entre ces matériaux.

De façon avantageuse ces verres ne comprennent pas de phosphates $P_2O_4$. En effet les phosphates ont un impact négatif sur la mouillabilité du verre.

Au sens de la présente invention, on entend par « composition de verre à base d'oxyde de tellure » toute composition de verre dont le composant principal est de l'oxyde de tellure ($TeO_2$), avantageusement dont le TeO2 est présent en une teneur supérieure aux autres composants, encore plus avantageusement en une teneur d'au moins 50% en pourcentage molaire.

Dans un mode de réalisation de la présente invention, l'alliage ou le métal ayant un coefficient de dilatation thermique supérieur à 16ppm/°C est choisi parmi :

- l'aluminium et ses alliages, avantageusement les alliages aluminium silicium, aluminium magnésium ou aluminium magnésium silicium tels que par exemple les alliages des séries 4000 (aluminium silicium), en particulier les alliages 4047 et 4032, les alliages des séries 5000 (aluminium magnésium), en particulier les alliages 5083 et 5754 et les alliages des séries 6000 (aluminium magnésium silicium), en particulier l'alliage 6061, encore plus particulièrement les alliages des séries 5000 (aluminium magnésium), de façon particulière l'alliage 5083 ;
- l'inox, en particulier le 304L et le 316L,
- le cuivre et les alliages de cuivre ayant éventuellement subi un traitement de surface, en particulier nickelé ou nickelé-doré, avantageusement un alliage cuivre béryllium, tel que l'alliage cuivre-béryllium type 33, encore appelé C17300 (1,8% Be, 0,2% Co et 0,2% minimum de Pb pour l'usinabilité) ayant éventuellement subi un traitement de surface, en particulier nickelé ou nickelé-doré.

En général, les coefficients de dilatation thermique sont pour:

- l'alliage cuivre béryllium de type 33 : 17,3 ppm/°C,
- les alliages d'aluminium :

    - l'alliage 5083 : 25,2ppm/°C
    - l'alliage 5754 : 24,6ppm/°C
    - l'alliage 6061 : 23,4ppm/°C
    - l'alliage 4032 : 20,2ppm/°C
    - l'alliage 4047 :19ppm/°C

- l'Inox 304L : 17ppm/°C
- l'Inox 316L : 16,5ppm/°C

Le coefficient de dilatation thermique (CTE) est mesuré dans le cadre de la présente invention sur une TMA de chez TA instrument (TMA 2940), avec une rampe de 2°/min de 30 à 250 °C.

La composition selon la présente invention comprend donc, en pourcentage molaire, de 50 à 80 % de $TeO_2$, avantageusement de 55 à 75%, en particulier de 60 à 70 %, plus avantageusement 65%.

La composition selon la présente invention comprend en outre du ZnO.

Le ZnO permet à la composition de verre d'avoir une bonne stabilité. La teneur en ZnO de la composition selon la présente invention en pourcentage molaire est donc de 8 à 40 %, avantageusement de 10 à 40%, plus avantageusement de 15 à 40%, encore plus avantageusement de 15 à 38%, particulièrement avantageusement de 15 à 35 %, en particulier de 10 à 35%, plus particulièrement de 17 à 30%, encore plus particulièrement de 20 à 29%.

La composition de verre selon la présente invention comprend en outre du $TiO_2$. En effet le $TiO_2$ semble apporter une excellente durabilité au verre. La teneur en $TiO_2$ de la composition selon la présente invention en pourcentage molaire est donc de 2 à 25%, avantageusement de 2 à 22%, plus avantageusement de 2 à 20%, particulièrement avantageusement de 3 à 10 %, encore plus avantageusement de 5%.

La composition selon la présente invention comprend de plus un oxyde $\alpha_xO_y$, $\alpha$ étant un élément choisi dans le groupe constitué par Ba, Ce, Er, Sb, Y, La et B, en particulier choisi dans le groupe constitué par Ce et Ba, x étant un nombre entier égal à 1 ou 2 et y un nombre entier égal à 1, 2 ou 3, à la condition que $ZnF_2$ soit également présent dans la composition lorsque $\alpha_xO_y$ est BaO.

Cet oxyde permet d'améliorer la stabilité, la mouillabilité et/ou le coefficient de dilatation thermique CTE (Coefficient of Thermal Expansion) des verres.

La teneur en $\alpha_xO_y$ de la composition selon la présente invention en pourcentage molaire est donc de 1 à 20 %, avantageusement de 1 à 15, plus avantageusement de 1 à 10%, particulièrement avantageusement de 1 à 6%, encore plus avantageusement de 1 à 5%, en particulier de 2 à 15 %, plus particulièrement de 2 à 10%, en particulier de 3 à 5%.

Dans un mode de réalisation avantageux, $\alpha_xO_y$ est choisi dans le groupe constitué par $Y_2O_3$, $CeO_2$, $Sb_2O_3$, $Er_2O_3$, $La_2O_3$, $B_2O_3$ et BaO, en particulier choisi dans le groupe constitué par $CeO_2$ et BaO.

La composition selon la présente invention peut comprendre de plus du $ZnF_2$. Le $ZnF_2$ est obligatoirement présent lorsque $\alpha_xO_y$ est BaO, notamment afin d'améliorer la stabilité de la composition.

S'il est présent, la teneur en $ZnF_2$ de la composition selon la présente invention en pourcentage molaire est donc de 2 à 10%, avantageusement de 3 à 8 %, encore plus avantageusement de 4 à 6%, en particulier de 5%.

Dans un mode de réalisation avantageux, la composition de verre selon la présente invention a un coefficient de dilatation thermique (CTE) compris entre 11 et 22 ppm/°C, avantageusement entre 11,5 et 19 ppm/°C, plus avantageusement entre 12 et 16 ppm/°C, en particulier entre 13 et 16 ppm/°C. Dans un mode de réalisation avantageux, la composition de verre selon la présente invention a un CTE inférieur à celui du métal ou alliage de métal destiné au scellement verre-métal.

Dans un autre mode de réalisation avantageux, la composition de verre selon la présente invention a un angle de mouillage inférieur à 105°, avantageusement compris entre 10° et 98°, en particulier entre 30° et 98°, mesuré d'une manière optique, avec un appareil photo Nikkon (D5100, objectif : AF-S Micro NiKKON 40mm 1:2,8G) et le logiciel freeware ImageJ à une température comprise entre 400 et 510°C.

Un bon angle de mouillage permet d'éviter la présence d'air entre le verre et le métal ou alliage métallique ce qui évite les problèmes d'herméticité.

Dans un autre mode de réalisation avantageux, la composition de verre selon la présente invention a une température de transition vitreuse (Tg) inférieure à 500°C, avantageusement comprise entre 250 et 400°C, en particulier comprise entre 300 et 380°C. Une faible température de transition vitreuse permet d'obtenir un scellement verre-métal à plus faible température, ce qui est utile pour le scellement verre-métal d'alliages d'aluminium qui ont une faible température de fusion. En effet ceci évite donc le ramollissement de ses alliages lors du procédé de scellement verre-métal. Toutefois, une température de transition vitreuse trop faible n'est pas intéressante dans le cadre de la présente invention car il convient d'obtenir un connecteur ayant une tenue en température d'au moins 200°C.

La Tg est mesurée grâce à un DSC (Differential scanning calorimetry): DSC setaram (DSC 131). La mesure est effectuée de 20 à 580 °C avec une rampe de 10°C/min. Les températures Tg et Tx sont les températures onset (de début de phénomène)

Dans un autre mode de réalisation avantageux, la composition de verre selon la présente invention a une durabilité chimique comprise entre $1\text{X}10^{-6}$ et $1\text{X}10^{-8}$ g/(cm$^2$.min) déterminée en soxhlet à 95°C dans de l'eau déminéralisée et renouvelée continuellement selon la norme IS016797.

Des exemples de composition de verre selon la présente invention sont rassemblés dans le tableau 1 ci-dessous :

Tableau 1 : Données générales sur des compositions de verres selon l'invention

| verre | Composition | Tg (°C) | CTE (ppm/°C) |
|---|---|---|---|
| 1 | $(TeO_2)_{65}(ZnO)_{27}(TiO_2)_5(Y_2O_3)_3$ | 375 | 14,07 |
| 2 | $(TeO_2)_{65}(Zn0)_{27}(TiO_2)_5(CeO_2)_3$ | 357 | 13,76 |
| 3 | $(TeO_2)_{65}(ZnO)_{25}(TiO_2)_5(Sb_2O_3)_5$ | 339 | 15,53 |
| 4 | $(TeO_2)_{65}(ZnO)_{29}(TiO_2)_5(Er_2O_3)_1$ | 359 | 13,34 |
| 5 | $(TeO_2)_{65}(ZnO)_{27}(TiO_2)_5(La_2O_3)_3$ | 371 | 13,46 |
| 6 | $(TeO_2)_{65}(ZnO)_{27}(TiO_2)_5(B_2O_3)_3$ | 354 | 14,43 |
| 7 | $(TeO_2)_{65}(ZnO)_{20}(TiO_2)_5(ZnF_2)_5(BaO)_5$ | 349 | 15,9 |

La présente invention concerne en outre l'utilisation de la composition de verre selon l'invention, en particulier telle que décrite ci-dessus, pour le scellement verre-métal du cuivre ou d'un alliage de cuivre, ayant éventuellement subi un traitement de surface (dépôt d'une couche métallique en surface), en particulier nickelé ou nickelé-doré, avantageusement un alliage cuivre béryllium, ayant éventuellement subi un traitement de surface, en particulier nickelé ou nickelé-doré, avec un alliage ou un métal ayant un coefficient de dilatation thermique supérieur à 16ppm/°C, en particulier différent du cuivre ou d'un alliage de cuivre.

Au sens de la présente invention on entend par « cuivre ou alliage de cuivre nickelé», tout cuivre ou alliage de cuivre ayant subi un traitement de surface de façon à déposer une fine couche de nickel à sa surface, en particulier par électrolyse ou par un procédé de dépôt chimique. Cette couche de nickel comprend en général également du phosphore, avantageusement en une teneur en pourcentage molaire comprise entre 5 et 12%, en particulier pour rendre cette couche amagnétique, une teneur en pourcentage molaire comprise entre 10,5 et 12%. L'épaisseur de cette couche est en général comprise entre 1 et 20 $\mu$m, en particulier entre 1 et 15 $\mu$m avantageusement entre 1 et 7 $\mu$m. Cette couche peut être complétée par une couche d'or. On parle alors de « cuivre ou alliage de cuivre nickelé-doré » selon la présente invention. Dans ce cas, chaque couche a avantageusement une épaisseur comprise entre 1 et 10 $\mu$m, en particulier entre 1 et 7 $\mu$m.

Dans un mode de réalisation avantageux, l'alliage ou métal ayant un coefficient de dilatation thermique supérieur à 16ppm/°C est tel que décrit ci-dessus. En particulier l'alliage ou métal ayant un coefficient de dilatation thermique supérieur à 16ppm/°C autre que du cuivre ou qu'un alliage de cuivre est choisi parmi l'aluminium et ses alliages et l'inox, avantageusement il s'agit d'un alliage d'aluminium, en particulier choisi parmi un alliage aluminium silicium, aluminium magnésium ou aluminium magnésium silicium, plus particulièrement tels que décrits ci-dessus.

Dans un mode de réalisation particulièrement avantageux de l'utilisation selon l'invention, le scellement verre-métal est effectué dans un connecteur, avantageusement un connecteur miniature, en particulier un connecteur micro-D (selon la norme Mil-DTL-83513), entre un contact en cuivre ou en alliage de cuivre, en particulier en alliage de cuivre tel qu'un alliage cuivre béryllium, ayant éventuellement subi un traitement de surface, en particulier nickelé ou nickelé-doré, et un insert et/ou boîtier en métal ou alliage ayant un coefficient de dilatation thermique supérieur à 16ppm/°C.

La présente invention concerne de plus un connecteur comprenant un contact en cuivre ou en alliage de cuivre, ayant éventuellement subi un traitement de surface, en particulier nickelé ou nickelé-doré, avantageusement en alliage cuivre béryllium, ayant éventuellement subi un traitement de surface, en particulier nickelé ou nickelé-doré, un insert et/ou boîtier en métal ou alliage ayant un coefficient de dilatation thermique supérieur à 16ppm/°C, en particulier autre que du cuivre ou qu'un alliage de cuivre, et un matériau de scellement verre-métal entre le contact et l'insert et/ou boîtier, caractérisé en ce que le matériau de scellement est un verre à base d'oxyde de tellure ayant la composition selon l'invention, en particulier telle que décrite ci-dessus.

De façon avantageuse, l'alliage ou métal ayant un coefficient de dilatation thermique supérieur à 16ppm/°C est tel que décrit ci-dessus.

En particulier, le connecteur selon l'invention est un connecteur miniature, plus particulièrement un connecteur micro-D (selon la norme Mil-DTL-83513 d'octobre 2008).

Dans un mode de réalisation avantageux, le connecteur selon l'invention est hermétique avec un taux de fuite à l'hélium inférieur à $1X10^{-9}$ mbar.l/s, avantageusement inférieur à $3X10^{-10}$ mbar.l/s, en particulier inférieur à $1X10^{-10}$ mbar.l/s, mesuré à l'aide d'un détecteur de fuite à l'hélium (ASM 142 d'Adixen) selon les conditions A4 de la norme MIL-STD-883 d'avril 2016.

Dans un autre mode de réalisation avantageux, le connecteur selon l'invention présente une résistance d'isolement entre les contacts et entre chaque contact et l'insert et/ou boitier > 5 Gohms, mesurée à l'aide d'un mégohmmètre à 500V DC, en particulier l'appareil Cable test, Horizon II, modèle HV4.

Dans encore un autre mode de réalisation avantageux, le connecteur selon l'invention a une température d'utilisation pouvant aller jusqu'à 200 °C.

Avantageusement, l'alliage de cuivre ou le cuivre du contact n'est pas nickelé et l'alliage ou métal ayant un coefficient de dilatation thermique supérieur à 16ppm/°C est choisi parmi l'aluminium et ses alliages. De façon avantageuse, dans ce cas, le connecteur selon l'invention est amagnétique avec un magnétisme rémanent < 20nT, mesuré selon la norme GFSC-S-311 de février 1996, à l'aide d'un magnétomètre tridimensionnel MEDA FVM400.

La présente invention concerne enfin un procédé de scellement verre-métal d'un contact en cuivre ou en alliage de cuivre, ayant éventuellement subi un traitement de surface, en particulier nickelé ou nickelé-doré, dans un insert et/ou boîtier en métal ou alliage ayant un coefficient de dilatation thermique supérieur à 16ppm/°C, en particulier autre que du cuivre ou qu'un alliage de cuivre, comprenant les étapes successives suivantes

- a) fourniture d'un contact en cuivre ou en alliage de cuivre, en particulier en alliage cuivre béryllium, ayant éventuellement subi un traitement de surface, en particulier nickelé ou nickelé-doré, et d'un insert et/ou boîtier en métal ou alliage ayant un coefficient de dilatation thermique supérieur à 16ppm/°C,
- b) fourniture d'une préforme, avantageusement sous forme cylindrique, de verre à base d'oxyde de tellure ayant la composition selon la présente invention et en particulier telle que décrite ci-dessus ;
- c) mise en contact de la préforme avec le contact et avec l'insert et/ou le boîtier;
- d) maintien du contact de l'ensemble contact - préforme - insert et/ou boîtier à l'aide d'un outillage adapté ;
- e) chauffage de l'ensemble contact - préforme - insert et/ou boîtier à une température et pendant un temps suffisant pour obtenir le scellement verre-métal;
- f) récupération de l'ensemble ainsi scellé.

De façon avantageuse, l'alliage ou métal ayant un coefficient de dilatation thermique supérieur à 16ppm/°C est tel que décrit ci-dessus.

Dans un mode de réalisation particulier du procédé selon la présente invention, la température de l'étape e) est comprise entre 350 et 500°C, en particulier entre 400 et 500°C, plus particulièrement entre 400 et 450°C.

Dans un autre mode de réalisation du procédé selon la présente invention le temps de chauffage de l'étape e) est compris entre 15 minutes et 2 heures, en particulier entre 30 minutes et 1 heure.

Le chauffage de l'étape e) peut être réalisé par exemple à l'aide d'un four ou par induction.

L'invention sera mieux comprise à la lumière de la description des figures et des exemples qui suivent.

La figure 1 représente un exemple d'un connecteur micro-D femelle 15 points selon la norme Mil-DTL-83513.
La figure 2 représente une vue schématique d'un scellement en compression en coupe (figure 2A) et en vue de dessus (figure 2B) d'un contact (1) dans un boitier (3) à l'aide de verre (2) selon l'invention.

**Exemple 1 : caractéristiques des compositions de verre selon l'invention**

Comme beaucoup de verres, certains verres selon l'invention présentent un phénomène de cristallisation lorsqu'ils sont soumis à haute température. Afin de réduire ce phénomène qui peut impacter sur le procédé et les résultats de scellement, on cherche à augmenter l'écart entre la température de transition vitreuse Tg et la température de cristallisation Tc :

$$\Delta T(°C) = Tc(°C) - Tg(°C).$$

Plus important est $\Delta T$, plus favorable est le procédé de scellement.
Dans le Tableau 2 sont présentés les résultats de $\Delta T$ obtenus des mesures DSC pour des exemples de composition de verre selon l'invention.

Tableau 2 : Compositions chimiques des verres et les températures Tc et Tg correspondantes

| Exemple Verre | Composition (% atomique) | | | | Tg (°C) | Tc (°C) | $\Delta$T (°C) |
|---|---|---|---|---|---|---|---|
| | $TeO_2$ | ZnO | $TiO_2$ | $\alpha_xO_y$ | | | |
| Ex 1 | 65 | 27 | 5 | 3 $Y_2O_3$ | 375 | >600 | >225 |
| Ex 2 | 65 | 27 | 5 | 3 $CeO_2$ | 357 | 529 | 172 |
| Ex 3 | 65 | 25 | 5 | 5 $Sb_2C_3$ | 339 | 497 | 158 |
| Ex 4 | 65 | 29 | 5 | 1 $Er_2O_3$ | 359 | 521 | 162 |
| Ex 5 | 65 | 27 | 5 | 3 $La_2O_3$ | 371 | 535 | 164 |
| Ex 6 | 65 | 27 | 5 | 3 $B_2O_3$ | 354 | 520 | 166 |
| Ex 7 | 65 | 20 | 5 | 5 $ZnF_2$ + 5 BaO | 349 | >600 | >251 |

Il est a remarquer que dans les cas des Ex 1 et Ex 7, la température de cristallisation n'a pas pu être détectée, dépassant la limite de l'instrument de mesure DSC utilisé.

En conclusion, les verres sélectionnés sont tous stables thermiquement pour être utilisés pour le scellement verre-métal.

La mouillabilité de verre sur une surface métallique est une condition préalable pour le scellement verre-métal. Elle a été évaluée à l'aide de la mesure de l'angle de mouillage sur une surface en aluminium dans les conditions proches de celles de scellement. Pour la détermination de l'angle de mouillage $\Theta$, le verre est déposé sur une feuille d'aluminium et exposé dans un four à la température indiquée pendant la durée indiquée dans le tableau 3 (même température et même durée que pour le procédé de scellement verre-métal). L'ensemble est ensuite sorti du four et le verre se fige immédiatement. L'angle est ensuite déterminé d'une manière optique, avec un appareil photo Nikkon (D5100, objectif : AF-S Micro NiKKON 40mm 1:2.8G) et le logiciel freeware ImageJ.

Dans le Tableau 3 sont présentés les résultats obtenus sur les compositions de verres selon l'invention. Dans certains cas la mesure a été faite à plusieurs températures, étant donné que la mouillabilité varie en fonction de celle-ci. En général, plus la valeur de l'angle est faible, plus un bon niveau de scellement est favorisé. Les verres dont les angles de mouillage à gauche et à droite sont inférieurs à 105° sont préférés.

Tableau 3 : Angles de mouillage des verres.

| Exemple Verre | Température (°C) | Durée (min) | Angle mouillage obtenus à gauche (°) | Angle mouillage obtenus à droite (°) |
|---|---|---|---|---|
| 1 | 500 | 30 | 97,2 | 91,5 |
| 2 | 470-480-500 | | 81,1-93,4-53,2 | 96,1-89,7-56,7 |
| 3 | 460-470-480 | | 81-62,4-53,2 | 77-61,9-58,3 |
| 4 | 480-500 | | 91,6-42,4 | 74,9-58 |
| 5 | 500 | | 58,1 | 58,3 |
| 6 | 480 | | 67,4 | 80,1 |
| 7 | 510 | 60 | 69,5 | 72,4 |

Toutes les compositions de verre selon l'invention ont donc des propriétés de mouillage suffisantes pour être utilisables dans le scellement verre-métal selon l'invention.

Les propriétés physiques et mécaniques des verres selon l'invention ont été déterminées afin d'évaluer les performances des verres en application connecteur hermétique. Dans le Tableau 4 sont présentées les valeurs obtenues.

Tableau 4 : Propriétés physiques et mécaniques des verres.

| Exemple Verre | D Durabilité (g/cm$^2$ min) | d Densité (g/cm3) | E M. Young (GPa) | v C. Poisson | K Ténacité (MPa m ½) | H M. Cisaillement (GPa) |
|---|---|---|---|---|---|---|
| 1 | 3,47X10$^{-7}$ | 5,39 | 51,84 | 0,27 | 0,77 | 1,11 |
| 2 | 1,65X10$^{-7}$ | 5,44 | 52,87 | 0,26 | 0,72 | 1,03 |

(suite)

| Exemple Verre | D Durabilité (g/cm² min) | d Densité (g/cm3) | E M. Young (GPa) | v C. Poisson | K Ténacité (MPa m ½) | H M. Cisaillement (GPa) |
|---|---|---|---|---|---|---|
| 3 | 3,87X10⁻⁷ | 5,4 | 47,85 | 0,17 | 0,74 | 1,05 |
| 4 | 1,81X10⁻⁷ | 5,47 | 50,28 | 0,29 | 0,81 | 1,02 |
| 5 | 9,18X10⁻⁸ | 5,42 | 52,83 | 0,30 | 0,77 | 1,06 |
| 6 | 2,52X10⁻⁷ | 5,34 | 50,15 | 0,29 | 0,77 | 1,07 |
| 7 | 3,16X10⁻⁷ | - | | | | |

La durabilité mesure la résistance du verre à l'érosion de l'eau chaude et la ténacité caractérise le comportement du matériau à la propagation de fissures. En particulier, la ténacité qui mesure le pouvoir de résistance à la propagation de fissures (ou de micro-fissures) est très utile dans l'application de connecteur hermétique où ladite propagation peut dégrader le niveau d'herméticité.

Les valeurs de durabilité chimique ont été déterminées en soxhlet à 95°C dans de l'eau déminéralisée et renouvelée continuellement selon la norme IS016797 d'avril 2004. Ceci est un test très critique car la vitesse de dissolution reste à son maximum durant toute la durée (pas de saturation de l'eau).

**Exemple 2 : scellement verre-métal entre des contacts en alliage de cuivre et un boitier en alliage d'aluminium avec des compositions de verre selon l'invention**

Les scellements verre-métal avec ces compositions de verre sont réalisés dans des boitiers en alliage d'aluminium 5083.

Le contact utilisé est en alliage de cuivre : du cuivre béryllium type 33, encore appelé C17300 (1,8% Be, 0,2% Co et 0,2% minimum de Pb pour l'usinabilité). Le verre est apporté sous forme d'une préforme cylindrique autour de chaque contact.

Pour réaliser les scellements verre-métal, l'ensemble métaux-préformes de verre est maintenu en place à l'aide d'un outillage adapté.

La chauffe est réalisée dans un four, sans atmosphère protégée à la température et pendant les durées indiquées dans le tableau 5.

Le scellement verre-métal se fait en compression au niveau du boitier comme schématisé dans la Figure 2. Le verre se retrouve ainsi en compression de toute part, sauf au niveau du contact où il y a une extension radiale. L'herméticité à l'hélium est mesurée à l'aide d'un détecteur de fuite à l'hélium (ASM 142 d'Adixen) selon la norme MIL-STD-883 d'avril 2016, conditions A4. Les taux de fuite mesurés sont à la limite de détection de l'appareil lors d'une mesure rapide, c'est-à-dire inférieure à 1 minute de mesure (3X10⁻¹⁰ mbar.l/s).

Le Tableau 5 suivant présente les résultats obtenus avec ces verres.

La résistance d'isolement est mesurée à l'aide d'un mégohmmètre sous 500V DC. Les résistances d'isolement obtenues atteignent la limite de détection de l'appareil (20 Gohm).

Tableau 5 : Données expérimentales obtenues avec les verres selon l'invention dans le procédé selon l'exemple 1

| verre | Temps/température (min/°C) de l'opération de scellement | Herméticité à l'hélium (mbar.l/s) | Résistance d'isolement (Gohm) |
|---|---|---|---|
| 7 | 30 / 430 | < 1X10⁻¹⁰ | >6 |
| 2 | 30 / 440 | < 1X10⁻¹⁰ | >6 |

Les différents scellements verre-métal réalisés ont ensuite été testés en vieillissements thermiques statique à 150°C et à 200°C (pendant 100h) et les résultats n'ont pas montré de dégradation en herméticité par le test de fuite selon la norme MIL-STD-883 d'avril 2016, conditions A4.

Ces verres sont donc adaptés pour le scellement verre-métal de connecteurs. Il est ainsi possible d'obtenir grâce à ces verres, des connecteurs, avec des contacts en alliage de cuivre, hermétiques, amagnétiques, conformes à la directive RoHS et ayant une température d'utilisation pouvant aller jusqu'à 200°C.

**Revendications**

1. Composition de verre à base d'oxyde de tellure pour le scellement verre-métal d'alliages ou de métaux ayant un coefficient de dilatation thermique supérieur à 16ppm/°C, ladite composition étant constituée par, en pourcentage molaire :

   - de 50 à 80 % de $TeO_2$, avantageusement de 60 à 70 % ;
   - de 8 à 40 % de ZnO, avantageusement de 15 à 35 % ;
   - de 2 à 25% de $TiO_2$, avantageusement de 3 à 10 %
   - de 1 à 20 % d'un oxyde $\alpha_x O_y$, avantageusement de 1 à 6 %, $\alpha$ étant un élément choisi dans le groupe constitué par Ba, Ce, Er, Sb, Y, La et B, x étant un nombre entier égal à 1 ou 2 et y un nombre entier égal à 1, 2 ou 3;
   - éventuellement du $ZnF_2$ en une teneur de 2 à 10%, avantageusement de 3 à 8 %
   - et les impuretés inévitables,

   à la condition que $ZnF_2$ soit présent lorsque $\alpha_x O_y$ est BaO,
   ladite composition étant essentiellement exempte d'oxyde de plomb, d'oxyde de sodium, d'oxyde de potassium et d'oxyde de vanadium.

2. Composition de verre selon la revendication 1, **caractérisée en ce que** l'alliage ou le métal ayant un coefficient de dilatation thermique supérieur à 16ppm/°C est choisi dans le groupe constitué par l'aluminium, les alliages d'aluminium, avantageusement un alliage aluminium silicium, aluminium magnésium ou aluminium magnésium silicium, l'inox, le cuivre et les alliages de cuivre, éventuellement nickelés ou nickelés-dorés, avantageusement un alliage cuivre béryllium, éventuellement nickelé ou nickelé-doré.

3. Composition de verre selon l'une quelconque des revendications 1 ou 2, **caractérisée en ce que** ce que $\alpha_x O_y$ est choisi dans le groupe constitué par $Y_2O_3$, $CeO_2$, $Sb_2O_3$, $Er_2O_3$, $La_2O_3$, $B_2O_3$ et BaO.

4. Composition de verre selon l'une quelconque des revendications 1 à 3, **caractérisée en ce que** le coefficient de dilatation thermique du verre est compris entre 11 et 22 ppm/°C, avantageusement entre 12 et 16 ppm/°C.

5. Utilisation de la composition de verre selon l'une quelconque des revendications 1 à 4 pour le scellement verre-métal du cuivre ou d'un alliage de cuivre, éventuellement nickelé ou nickelé-doré, avantageusement un alliage cuivre béryllium, éventuellement nickelé ou nickelé-doré, avec un alliage ou un métal ayant un coefficient de dilatation thermique supérieur à 16ppm/°C, en particulier autre que du cuivre ou qu'un alliage de cuivre.

6. Utilisation selon la revendication 5, **caractérisée en ce que** l'alliage ou métal ayant un coefficient de dilatation thermique supérieur à 16ppm/°C autre que du cuivre ou qu'un alliage de cuivre est choisi dans le groupe constitué par l'aluminium, les alliages de l'aluminium et l'inox, avantageusement il s'agit d'un alliage d'aluminium choisi dans le groupe constitué par un alliage aluminium silicium et un alliage aluminium magnésium.

7. Utilisation selon l'une quelconque des revendications 5 ou 6, **caractérisé en ce que** le scellement verre-métal est effectué dans un connecteur, avantageusement un connecteur micro-D, entre un contact en cuivre ou en alliage de cuivre, éventuellement nickelé ou nickelé-doré, et un insert et/ou boîtier en alliage ou métal ayant un coefficient de dilatation thermique supérieur à 16ppm/°C.

8. Connecteur comprenant un contact en cuivre ou en alliage de cuivre, éventuellement nickelé ou nickelé-doré, avantageusement en alliage cuivre béryllium, éventuellement nickelé ou nickelé-doré, un insert et/ou boîtier en métal ou alliage ayant un coefficient de dilatation thermique supérieur à 16ppm/°C et un matériau de scellement verre-métal entre le contact et l'insert et/ou boîtier, **caractérisé en ce que** le matériau de scellement est un verre à base d'oxyde de tellure ayant la composition telle que définie dans l'une quelconque des revendications 1 à 4.

9. Connecteur selon la revendication 8, **caractérisé en ce que** l'alliage ou métal ayant un coefficient de dilatation thermique supérieur à 16ppm/°C est choisi dans le groupe constitué par l'aluminium, les alliages d'aluminium et l'inox, avantageusement il s'agit d'un alliage d'aluminium choisi dans le groupe constitué par un alliage aluminium silicium et un alliage aluminium magnésium.

10. Connecteur selon l'une quelconque des revendications 8 ou 9, **caractérisé en ce qu'**il s'agit d'un connecteur micro-D.

**11.** Connecteur selon l'une quelconque des revendications 8 à 10, **caractérisé en ce qu'**il est hermétique avec un taux de fuite à l'hélium inférieur à 3X10$^{-10}$ mbar.l/s, présente une résistance d'isolement entre les contacts et entre chaque contact et l'insert et/ou boitier > 5 Gohms et a une température d'utilisation pouvant aller jusqu'à 200 °C.

**12.** Connecteur selon l'une quelconque des revendications 8 à 11, **caractérisé en ce que** l'alliage de cuivre ou le cuivre du contact n'est pas nickelé, **en ce que** l'alliage ou métal ayant un coefficient de dilatation thermique supérieur à 16ppm/°C est choisi dans le groupe constitué par l'aluminium et ses alliages et **en ce que** le connecteur est amagnétique avec un magnétisme rémanent <20nT.

**13.** Procédé de scellement verre-métal d'un contact en cuivre ou en alliage de cuivre, éventuellement nickelé ou nickelé-doré, dans un insert et/ou boîtier en métal ou alliage ayant un coefficient de dilatation thermique supérieur à 16ppm/°C, en particulier autre que du cuivre ou qu'un alliage de cuivre, comprenant les étapes successives suivantes

- a) fourniture d'un contact en cuivre ou en alliage de cuivre, éventuellement nickelé ou nickelé-doré, et d'un insert et/ou boîtier en métal ou alliage ayant un coefficient de dilatation thermique supérieur à 16ppm/°C, en particulier autre que du cuivre ou qu'un alliage de cuivre ;
- b) fourniture d'une préforme de verre à base d'oxyde de tellure ayant la composition telle que définie dans l'une quelconque des revendications 1 à 4 ;
- c) mise en contact de la préforme avec le contact et avec l'insert et/ou le boîtier;
- d) maintien du contact de l'ensemble contact - préforme - insert et/ou boîtier à l'aide d'un outillage adapté ;
- e) chauffage de l'ensemble contact - préforme - insert et/ou boîtier à une température et pendant un temps suffisant pour obtenir le scellement verre-métal;
- f) récupération de l'ensemble ainsi scellé.

**14.** Procédé selon la revendication 13, **caractérisé en ce que** la température de l'étape e) est comprise entre 350 et 500°C.

## Patentansprüche

**1.** Glaszusammensetzung auf Basis von Telluroxid für die Glas-Metall-Abdichtung von Legierungen oder von Metallen mit einem thermischen Ausdehnungskoeffizienten von mehr als 16 ppm/°C, wobei die Zusammensetzung in Molprozent gebildet wird aus:

- 50 bis 80 % $TeO_2$, vorteilhafterweise 60 bis 70 %,
- 8 bis 40 % ZnO, vorteilhafterweise 15 bis 35 %,
- 2 bis 25 % $TiO_2$, vorteilhafterweise 3 bis 10 %,
- 1 bis 20 % eines Oxids $\alpha_x O_y$, vorteilhafterweise 1 bis 6 %, wobei $\alpha$ ein Element ist, das aus der Gruppe ausgewählt ist, die aus Ba, Ce, Er, Sb, Y, La und B besteht, x eine ganze Zahl gleich 1 oder 2 ist und y eine ganze Zahl gleich 1, 2 oder 3 ist,
- optional $ZnF_2$ mit einem Gehalt von 2 bis 10 %, vorteilhafterweise von 3 bis 8%,
- und den unvermeidlichen Verunreinigungen,

mit der Maßgabe, dass $ZnF_2$ vorhanden ist, wenn $\alpha_x O_\gamma$ BaO ist, wobei die Zusammensetzung im Wesentlichen frei von Bleioxid, Natriumoxid, Kaliumoxid und Vanadiumoxid ist.

**2.** Glaszusammensetzung nach Anspruch 1, **dadurch gekennzeichnet, dass** die Legierung oder das Metall mit einem thermischen Ausdehnungskoeffizienten von mehr als 16 ppm/°C aus der Gruppe ausgewählt ist, die aus Aluminium, den Legierungen von Aluminium, vorteilhafterweise einer Legierung aus Aluminium und Silizium, Aluminium und Magnesium oder Aluminium, Magnesium und Silizium, aus Inox, Kupfer und den Legierungen von Kupfer, die optional vernickelt oder vernickelt-vergoldet sind, vorteilhafterweise einer Legierung aus Kupfer und Beryllium, die optional vernickelt oder vernickelt-vergoldet ist, besteht.

**3.** Glaszusammensetzung nach einem der Ansprüche 1 oder 2, **dadurch gekennzeichnet, dass** $\alpha_x O_\gamma$ aus der Gruppe ausgewählt ist, die aus $Y_2O_3$, $CeO_2$, $Sb_2O_3$, $Er_2O_3$, $La_2O_3$, $B_2O_3$ und BaO besteht.

**4.** Glaszusammensetzung nach einem der Ansprüche 1 bis 3, **dadurch gekennzeichnet, dass** der thermische Ausdehnungskoeffizient des Glases zwischen 11 und 22 ppm/°C, vorteilhafterweise zwischen 12 und 16 ppm/°C beträgt.

5. Verwendung der Glaszusammensetzung nach einem der Ansprüche 1 bis 4 zur Glas-Metall-Abdichtung von Kupfer oder einer Legierung von Kupfer, die optional vernickelt oder vernickelt-vergoldet sind, vorteilhafterweise einer Legierung aus Kupfer und Beryllium, die optional vernickelt oder vernickelt-vergoldet ist, mit einer Legierung oder einem Metall mit einem thermischen Ausdehnungskoeffizienten von mehr als 16 ppm/°C, die/das insbesondere nicht Kupfer oder eine Legierung von Kupfer ist.

6. Verwendung nach Anspruch 5, **dadurch gekennzeichnet, dass** die Legierung oder das Metall mit einem thermischen Ausdehnungskoeffizienten von mehr als 16 ppm/°C, die/das nicht Kupfer oder eine Legierung von Kupfer ist, aus der Gruppe ausgewählt ist, die aus Aluminium, den Legierungen von Aluminium und aus Inox besteht, und es sich vorteilhafterweise um eine Legierung von Aluminium handelt, die aus der Gruppe ausgewählt ist, die aus einer Legierung aus Aluminium und Silizium und einer Legierung aus Aluminium und Magnesium besteht.

7. Verwendung nach einem der Ansprüche 5 oder 6, **dadurch gekennzeichnet, dass** die Glas-Metall-Abdichtung in einem Verbinder, vorteilhafterweise einem MicroD-Verbinder, zwischen einem Kontakt aus Kupfer oder aus einer Legierung von Kupfer, der optional vernickelt oder vernickelt-vergoldet ist, und einem Einsatz und/oder Gehäuse aus einer Legierung oder einem Metall mit einem thermischen Ausdehnungskoeffizienten von mehr als 16 ppm/°C erfolgt.

8. Verbinder, umfassend einen Kontakt aus Kupfer oder aus einer Legierung von Kupfer, der optional vernickelt oder vernickelt-vergoldet ist, vorteilhafterweise einer Legierung aus Kupfer und Beryllium, die optional vernickelt oder vernickelt-vergoldet ist, einen Einsatz und/oder ein Gehäuse aus Metall oder einer Legierung mit einem thermischen Ausdehnungskoeffizienten von mehr als 16 ppm/°C und ein Glas-Metall-Dichtungsmaterial zwischen dem Kontakt und dem Einsatz und/oder Gehäuse, **dadurch gekennzeichnet, dass** das Dichtungsmaterial ein Glas auf Basis von Telluroxid ist, das die Zusammensetzung aufweist, wie sie in einem der Ansprüche 1 bis 4 definiert ist.

9. Verbinder nach Anspruch 8, **dadurch gekennzeichnet, dass** die Legierung oder das Metall mit einem thermischen Ausdehnungskoeffizienten von mehr als 16 ppm/°C aus der Gruppe ausgewählt ist, die aus Aluminium, den Legierungen von Aluminium und aus Inox besteht, und es sich vorteilhafterweise um eine Legierung von Aluminium handelt, die aus der Gruppe ausgewählt ist, die aus einer Legierung aus Aluminium und Silizium und einer Legierung aus Aluminium und Magnesium besteht.

10. Verbinder nach einem der Ansprüche 8 oder 9, **dadurch gekennzeichnet, dass** es sich um einen MicroD-Verbinder handelt.

11. Verbinder nach einem der Ansprüche 8 bis 10, **dadurch gekennzeichnet, dass** er mit einer Helium-Leckagerate von weniger als 3 x 10$^{-10}$ mbar.l/s hermetisch dicht ist, einen Isolationswiderstand zwischen den Kontakten und zwischen jedem Kontakt und dem Einsatz und/oder Gehäuse > 5 Gigaohm aufweist und eine Verwendungstemperatur aufweist, die bis zu 200 °C gehen kann.

12. Verbinder nach einem der Ansprüche 8 bis 11, **dadurch gekennzeichnet, dass** die Legierung von Kupfer oder das Kupfer des Kontakts nicht vernickelt ist, dass die Legierung oder das Metall mit einem thermischen Ausdehnungskoeffizienten von mehr als 16 ppm/°C aus der Gruppe ausgewählt ist, die aus Aluminium und seinen Legierungen besteht, und dass der Verbinder nicht magnetisch ist, mit einem Restmagnetismus von < 20 nT.

13. Verfahren zur Glas-Metall-Abdichtung eines Kontakts aus Kupfer oder aus einer Legierung von Kupfer, der optional vernickelt oder vernickelt-vergoldet ist, in einem Einsatz und/oder Gehäuse aus Metall oder einer Legierung mit einem thermischen Ausdehnungskoeffizienten von mehr als 16 ppm/°C, das/die vorzugsweise nicht Kupfer oder eine Legierung von Kupfer ist, und welches der Reihe nach die folgenden Schritte umfasst

- a) Bereitstellen eines Kontakts aus Kupfer oder aus einer Legierung von Kupfer, die optional vernickelt oder vernickelt-vergoldet ist, und eines Einsatzes und/oder Gehäuses aus Metall oder einer Legierung mit einem thermischen Ausdehnungskoeffizienten von mehr als 16 ppm/°C, das/die insbesondere nicht Kupfer oder eine Legierung von Kupfer ist,
- b) Bereitstellen einer Vorform von Glas auf Basis von Telluroxid, das die Zusammensetzung aufweist, wie sie in einem der Patentansprüche 1 bis 4 definiert ist,
- c) Inkontaktbringen der Vorform mit dem Kontakt und mit dem Einsatz und/oder dem Gehäuse,
- d) Beibehalten des Kontakts der Anordnung aus Kontakt, Vorform und Einsatz und/oder Gehäuse mit Hilfe eines geeigneten Werkzeugs,

- e) Erwärmen der Anordnung aus Kontakt, Vorform und Einsatz und/oder Gehäuse auf eine Temperatur und für eine Zeit, die ausreichend sind, um die Glas-Metall-Dichtung zu erhalten,
- f) Gewinnung der so abgedichteten Anordnung.

14. Verfahren nach Anspruch 13, **dadurch gekennzeichnet, dass** die Temperatur in Schritt e) zwischen 350 und 500 °C beträgt.

**Claims**

1. A tellurium oxide-based glass composition for glass-to-metal sealing of alloys or metals having a coefficient of thermal expansion greater than 16 ppm/°C, said composition consisting of, in mole percent:

   - from 50 to 80% $TeO_2$, advantageously from 60 to 70%;
   - from 8 to 40% ZnO, advantageously from 15 to 35%;
   - from 2 to 25% $TiO_2$, advantageously from 3 to 10%.
   - from 1 to 20% of an oxide $\alpha_x O_y$, advantageously 1 to 6%, $\alpha$ being an element selected from the group consisting of Ba, Ce, Er, Sb, Y, La and B, x being an integer equal to 1 or 2 and y being an integer equal to 1, 2 or 3;
   - optionally $ZnF_2$ in a content of 2 to 10%, advantageously 3 to 8%
   - and unavoidable impurities,

   provided that $ZnF_2$ is present when $\alpha_x O_y$ is BaO,
   said composition being essentially free of lead oxide, sodium oxide, potassium oxide and vanadium oxide.

2. The glass composition as claimed in claim 1, **characterized in that** the alloy or metal having a coefficient of thermal expansion greater than 16 ppm/°C is selected from the group consisting of aluminum, aluminum alloys, advantageously an aluminum silicon, aluminum magnesium or aluminum magnesium silicon alloy, stainless steel, copper and copper alloys, optionally nickel-plated or nickel-gold-plated, advantageously a copper beryllium alloy, optionally nickel-plated or nickel-gold-plated.

3. The glass composition as claimed in any one of claims 1 or 2, **characterized in that** $\alpha_x O_y$ is selected from the group consisting of $Y_2O_3$, $CeO_2$, $Sb_2O_3$, $Er_2O_3$, $La_2O_3$, $B_2O_3$ and BaO.

4. The glass composition as claimed in any one of claims 1 to 3, **characterized in that** the coefficient of thermal expansion of the glass is between 11 and 22 ppm/°C, advantageously between 12 and 16 ppm/°C.

5. Use of the glass composition as claimed in any one of claims 1 to 4 for glass-metal sealing of copper or a copper alloy, optionally nickel-plated or nickel-gold-plated, advantageously a copper-beryllium alloy, optionally nickel-plated or nickel-gold-plated, with an alloy or a metal having a coefficient of thermal expansion greater than 16 ppm/°C, in particular other than copper or a copper alloy.

6. Use as claimed in claim 5, **characterized in that** the alloy or metal having a coefficient of thermal expansion greater than 16 ppm/°C other than copper or a copper alloy is selected from the group consisting of aluminum, aluminum alloys and stainless steel, advantageously it is an aluminum alloy selected from the group consisting of an aluminum-silicon alloy and an aluminum-magnesium alloy.

7. Use as claimed in any one of claims 5 or 6, **characterized in that** the glass-to-metal sealing is carried out in a connector, advantageously a micro-D connector, between a contact made of copper or copper alloy, optionally nickel-plated or nickel-gold-plated, and an insert and/or housing made of alloy or metal having a coefficient of thermal expansion greater than 16 ppm/°C.

8. A connector comprising a contact of copper or copper alloy, optionally nickel-plated or nickel-gold-plated, advantageously copper-beryllium alloy, optionally nickel-plated or nickel-gold-plated, an insert and/or housing of metal or alloy having a coefficient of thermal expansion greater than 16 ppm/°C and a glass-metal sealing material between the contact and the insert and/or housing, **characterized in that** the sealing material is a tellurium oxide-based glass having the composition as defined in any one of claims 1 to 4.

9. The connector as claimed in claim 8, **characterized in that** the alloy or metal having a coefficient of thermal expansion greater than 16 ppm/°C is selected from the group consisting of aluminum, aluminum alloys and stainless steel, advantageously it is an aluminum alloy selected from the group consisting of an aluminum silicon alloy and an aluminum magnesium alloy.

10. The connector as claimed in any one of claims 8 or 9, **characterized in that** it is a micro-D connector.

11. The connector as claimed in any one of claims 8 to 10, **characterized in that** it is hermetic with a helium leakage rate of less than $3 \times 10^{-10}$ mbar·l/s, has an insulation resistance between the contacts and between each contact and the insert and/or housing > 5 Gohms and has an operating temperature of up to 200°C.

12. The connector as claimed in any one of claims 8 to 11, **characterized in that** the copper alloy or copper of the contact is not nickel-plated, **in that** the alloy or metal having a coefficient of thermal expansion greater than 16 ppm/°C is selected from the group consisting of aluminum and its alloys and **in that** the connector is non-magnetic with a remanent magnetism < 20 nT.

13. A process for glass-to-metal sealing of a contact made of copper or copper alloy, optionally nickel-plated or nickel-gold-plated, in an insert and/or housing made of metal or alloy having a coefficient of thermal expansion greater than 16 ppm/°C, in particular other than copper or copper alloy, comprising the following successive steps

   - a) providing a contact made of copper or copper alloy, optionally nickel-plated or nickel-gold-plated, and an insert and/or housing made of metal or alloy having a coefficient of thermal expansion greater than 16 ppm/°C, in particular other than copper or copper alloy;
   - b) providing a tellurium oxide-based glass preform having the composition as defined in any one of claims 1 to 4;
   - c) bringing the preform into contact with the contact and with the insert and/or the housing;
   - d) maintaining the contact of the contact - preform - insert and/or housing assembly by means of a suitable tool;
   - e) heating the contact - preform - insert and/or housing assembly to a temperature and for a time sufficient to obtain the glass-metal seal;
   - f) recovering the assembly thus sealed.

14. The process as claimed in claim 13, **characterized in that** the temperature of step e) is between 350 and 500°C.

**FIG.1**

**FIG.2A**

**FIG.2B**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9314613 A
- US 6932644 B
- US 4352951 A
- US 4202700 A
- US 5262364 A
- US 6037539 A
- US 4945071 A
- US 4743302 A
- US 5013697 A
- US 5116786 A
- WO 9310052 A
- FR 3036396
- US 2009018006 A
- JP H01138150 B
- JP H07330372 B